# EUROPEAN PATENT SPECIFICATION

(11) **EP 4 634 342 B1**
(45) Date of publication and mention of the grant of the patent: **09.09.2026**
(21) Application number: 23841415.5
(22) Date of filing: 06.12.2023
(51) Int. Cl.: C11D 1/00, C11D 3/08, C11D 3/10, C11D 3/20, C11D 3/22

(54) **DISHWASHING DETERGENT FORMULATION**
GESCHIRRSPÜLMITTELFORMULIERUNG
FORMULATION DE DÉTERGENT POUR LAVE-VAISSELLE

(30) Priority: 13.12.2022 US 202263432070 P
(43) Date of publication of application: 22.10.2025
(73) Proprietor: Rohm and Haas Company, Collegeville, PA 19426 (US)
(72) Inventor: BACKER, Scott, Collegeville, Pennsylvania 19426 (US); KOENIG, Jennifer, Collegeville, Pennsylvania 19426 (US); MERCANDO, Paul, Collegeville, Pennsylvania 19426 (US); PARK, Ericka, Collegeville, Pennsylvania 19426 (US); PULUKKODY, Randara, Collegeville, Pennsylvania 19426 (US); YIN, Ligeng, Collegeville, Pennsylvania 19426 (US)
(74) Representative: Beck Greener LLP
(86) International application number: PCT/US2023/082663
(87) International publication number: WO 2024/129458

(56) References cited:
- US-A1- 2003 083 223
- US-A1- 2010 273 695
- US-A1- 2013 025 500
- US-A1- 2021 324 304

## Description

The present invention relates to a dishwashing detergent formulation. In particular, the present invention relates to a dishwashing detergent formulation comprising: a builder; a nonionic surfactant; and a carboxymethyl guar gum, wherein the carboxymethyl guar gum has a weight average molecular weight, M_{w}, of greater than 500,000 Daltons and a carboxymethyl degree of substitution, DS_{CM}, of 0.17 to 1.

Dishwashing compositions are generally recognized as a class of detergent compositions distinct from those used for fabric washing or water treatment. Dishwashing compositions are expected by users to produce a film-free appearance on washed articles after a complete cleaning cycle.

Phosphate-free dishwashing compositions are increasingly desirable. Phosphate-free dishwashing compositions typically rely on non-phosphate builders, such as salts of citrate, carbonate, silicate, disilicate, bicarbonate, aminocarboxylate, and others to sequester calcium and magnesium from hard water, and upon drying, leave an insoluble visible deposit.

A family of polycarboxylate copolymers and their use as builders in detergent compositions and rinse aid compositions is disclosed by Christopher et al. in U.S. Patent No. 5,431,846 for use in the final rinse step of a dish or warewashing machine. Christopher et al. disclose block copolymers comprising from 20 to 95 mole % of monomer units derived from itaconic acid or a homologue thereof and from 5 to 80 mole % of monomer units derived from vinyl alcohol or a lower vinyl ester are excellent binders of divalent or polyvalent metals and are useful as potentially biodegradable builders in detergent compositions as well as in machine dishwashing compositions and anti-scaling rinse compositions.

A family of terpolymers and their use, among other things, as dispersants is disclosed by Swift et al in U.S. Patent No. 5,191,048. Swift et al teach a terpolymer comprising as polymerized units from about 15 to 55 mole percent of at least one first monomer selected from the group consisting of vinyl acetate, vinyl ethers and vinyl carbonates, from about 10 to 70 mole percent of at least one second monomer of an ethylenically unsaturated monocarboxylic acid, and from about 15 to 55 mole percent of at least one third monomer of an anhydride of a dicarboxylic acid and wherein said terpolymer is formed in a non-aqueous system such that less than about one more percent of the monomers are hydrolyzed during said polymerization. US 2021/324304 A1 discloses automatic dishwashing compositions incorporating dispersant polymers having good spotting and/or filming performance.

Notwithstanding there remains a need for new dispersant polymers for use in dishwashing formulations. In particular, there remains a need for new dispersant polymers for use in dishwashing formulations, wherein the dispersant polymers provide effective low filming performance; are biosourced and biodegradable.

The present invention provides a dishwashing detergent formulation comprising: a builder; a nonionic surfactant; and a carboxymethyl guar gum, wherein the carboxymethyl guar gum has a weight average molecular weight, M_{W}, of greater than 500,000 Daltons and a carboxymethyl degree of substitution, DS_{CM}, of 0.17 to 1.

The present invention provides a method of cleaning an article in an automatic dishwashing machine, comprising: providing at least one article; providing a dishwashing detergent formulation selected based on an ability to impede the formation of phosphonate scale on the at least one article, wherein the dishwashing detergent formulation is selected to be according to the present invention; and applying the selected dishwashing detergent formulation to the at least one article.

### DETAILED DESCRIPTION

Surprisingly, it has been found that, the carboxymethyl guar gum having a weight average molecular weight, M_{W}, > 500,000 Daltons and a carboxymethyl degree of substitution, DS_{CM}, of 0.17 to 1 provide good spotting and filming performance on glassware compared to conventional dispersant polymers, while having the benefit of improving the overall sustainability of the dishwashing detergent formulation (i.e., being biosourced and exhibiting improved biodegradability relative to conventional dispersant polymers such as polyacrylic acid).

Unless otherwise indicated, ratios, percentages, parts, and the like are by weight. Weight percentages (or wt%) in the composition are percentages of dry weight, i.e., excluding any water that may be present in the composition. Percentages of monomer units in the polymer are percentages of dry weight, i.e., excluding any water present in a polymer emulsion.

As used herein, unless otherwise indicated, the terms "weight average molecular weight" and "Mw" are used interchangeably to refer to the weight average molecular weight as measured in a conventional manner with gel permeation chromatography (GPC) and conventional standards, such as polyacrylic acid standards. GPC techniques are discussed in detail in Modem Size Exclusion Chromatography, W. W. Yau, J. J. Kirkland, D. D. Bly; Wiley-Interscience, 1979, and in A Guide to Materials Characterization and Chemical Analysis, J. P. Sibilia; VCH, 1988, p. 81-84. Weight average molecular weights are reported herein in units of Daltons.

Preferably, the dishwashing detergent formulation of the present invention, comprises: a builder (preferably, 1 to 97 wt% (more preferably 10 to 98.5 wt%; most preferably, 25 to 96 wt%), based on dry weight of the dishwashing detergent formulation, of the builder)(preferably, wherein the builder includes at least one of a carbonate, a bicarbonate, a citrate and a silicate); a nonionic surfactant (preferably, 0.2 to 15 wt% (more preferably, 0.5 to 10 wt%; most preferably, 1.5 to 8.5 wt%), based on dry weight of the dishwashing detergent formulation, of the nonionic surfactant); and a carboxymethyl guar gum (preferably, 0.2 to 15 wt% (more preferably, 1 to 10 wt%; most preferably, 2.5 to 7.5 wt%), based on dry weight of the dishwashing detergent formulation, of the carboxymethyl guar gum), wherein the carboxymethyl guar gum has a weight average molecular weight, Mw, of > 500,000 Daltons (preferably, 525,000 to 2,500,000 Daltons; more preferably, 600,000 to 2,250,000 Daltons; still more preferably, 750,000 to 2,100,000 Daltons; yet more preferably, 1,000,000 to 2,000,000 Daltons; still yet more preferably, 1,500,000 to 2,000,000 Daltons; most preferably, 1,600,000 to 1,850,000 Daltons) and a carboxymethyl degree of substitution, DS_{CM}, of 0.17 to 1 (preferably, 0.175 to 0.8; more preferably, 0.18 to 0.47; most preferably, 0.2 to 0.4).

Preferably, the dishwashing detergent formulation of the present invention, comprises a builder, wherein the builder comprises at least one of a carbonate, a bicarbonate, a citrate and a silicate. More preferably, the dishwashing detergent formulation of the present invention, comprises a builder, wherein the builder comprises a mixture of at least two components selected from the group consisting of a carbonate, a bicarbonate, a citrate and a silicate. Most preferably, the dishwashing detergent formulation of the present invention, comprises a builder, wherein the builder comprises a mixture of a carbonate, a citrate and a silicate.

Preferably, the dishwashing detergent formulation of the present invention, comprises: 1 to 97 wt% (preferably, 1 to 97 wt% (more preferably 10 to 98.5 wt%; most preferably, 25 to 96 wt%), based on dry weight of the dishwashing detergent formulation, of a builder. Preferably, the dishwashing detergent formulation of the present invention, comprises: ≥ 1 wt% (preferably, ≥ 10 wt%; more preferably, ≥ 25 wt%; most preferably, ≥ 40 wt%), based on dry weight of the dishwashing detergent formulation, of the builder. Preferably, the dishwashing detergent formulation of the present invention, comprises: ≤ 95 wt% (preferably, ≤ 90 wt%; more preferably, ≤ 85 wt%; most preferably, ≤ 80 wt%), based on dry weight of the dishwashing detergent formulation, of the builder. Weight percentages of carbonates, citrates and silicates are based on the actual weights of the salts, including metal ions.

The term "carbonate(s)" as used herein and in the appended claims refers to alkali metal or ammonium salts of carbonate, bicarbonate and/or sesquicarbonate. Preferably, the carbonate used in the dishwashing detergent formulation (if any) is selected from the group consisting of carbonate salts of sodium, potassium and lithium (more preferably, salts of sodium or potassium; most preferably, salts of sodium). More preferably, the carbonate used in the dishwashing detergent formulation (if any) includes at least one of sodium carbonate and sodium bicarbonate. Preferably, when the builder used in the dishwashing detergent formulation of the present invention includes carbonate, the dishwashing detergent formulation preferably, comprises 0 to 97 wt% (preferably, 5 to 75 wt%; more preferably, 10 to 60 wt%; most preferably 20 to 50 wt%), based on dry weight of the dishwashing detergent formulation, of carbonate.

The term "citrate(s)" as used herein and in the appended claims refers to alkali metal citrates. Preferably, the citrate used in the dishwashing detergent formulation (if any) is selected from the group consisting of citrate salts of sodium, potassium and lithium (more preferably, salts of sodium or potassium; most preferably, salts of sodium). More preferably, the citrate used in the dishwashing detergent formulation (if any) is sodium citrate. Preferably, when the builder used in the dishwashing detergent formulation of the present invention includes citrate, the dishwashing detergent formulation preferably, comprises 0 to 97 wt% (preferably, 5 to 75 wt%; more preferably, 10 to 60 wt%; most preferably 20 to 40 wt%), based on dry weight of the dishwashing detergent formulation, of the citrate.

The term "silicate(s)" as used herein and in the appended claims refers to alkali metal silicates. Preferably, the silicate used in the dishwashing detergent formulation (if any) is selected from the group consisting of silicate salts of sodium, potassium and lithium (more preferably, salts of sodium or potassium; most preferably, salts of sodium). More preferably, the silicate used in the dishwashing detergent formulation (if any) is sodium disilicate. Preferably, the builder used in the dishwashing detergent formulation of the present invention includes a silicate. Preferably, when the builder used in the dishwashing detergent formulation of the present invention includes a silicate, the dishwashing detergent formulation preferably, comprises 0 to 97 wt% (preferably, 0.1 to 10 wt%; more preferably, 0.5 to 7.5 wt%; most preferably 0.75 to 3 wt%), based on dry weight of the dishwashing detergent formulation, of the silicate(s).

Preferably, the dishwashing formulation of the present invention, comprises: 0.2 to 15 wt% (preferably, 0.5 to 10 wt%; most preferably, 1.5 to 8.5 wt%), based on dry weight of the dishwashing detergent formulation, of a nonionic surfactant. More preferably, the dishwashing detergent formulation of the present invention, comprises: 0.2 to 15 wt% (preferably, 0.5 to 10 wt%; most preferably, 1.5 to 8.5 wt%), based on dry weight of the dishwashing detergent formulation, of a nonionic surfactant; wherein the non-ionic surfactant is selected from the group consisting of polyoxyalkylene surfactants, polyalkylene glycol esters, polyoxyethylene derivatives of fatty acid esters of polyhydric alcohols, fatty acid esters of polyalkoxylated polyhydric alcohols, polyalkoxylated natural fats and oils, polyalkylene oxide block copolymers, alkyl polyglucosides, sucrose esters and mixtures thereof. Still more preferably, the dishwashing detergent formulation of the present invention, comprises: 0.2 to 15 wt% (preferably, 0.5 to 10 wt%; most preferably, 1.5 to 8.5 wt%), based on dry weight of the dishwashing detergent formulation, of a nonionic surfactant; wherein the non-ionic surfactant includes a fatty alcohol alkoxylate. Most preferably, the dishwashing detergent formulation of the present invention, comprises: 0.2 to 15 wt% (preferably, 0.5 to 10 wt%; most preferably, 1.5 to 8.5 wt%), based on dry weight of the dishwashing detergent formulation, of a nonionic surfactant; wherein the non-ionic surfactant is a fatty alcohol alkoxylate according to formula I 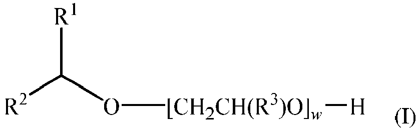 wherein w is an average of 5 to 100 (preferably, 6 to 75; more preferably, 7 to 60; most preferably, 8 to 50); wherein R¹ is selected from the group consisting of a hydrogen and a linear or branched C₁₋₂₀ alkyl group (preferably, a hydrogen, and a linear or branched C₁₋₂₀ alkyl group; more preferably, a hydrogen and a linear C₁₋₂₀ alkyl group); wherein R² is selected from the group consisting of a linear or branched C₁₋₂₀ alkyl group and a linear or branched C₁₋₄ hydroxyalkyl group (preferably, a linear or branched C₁₋₂₀ alkyl group; more preferably, a linear C₁₋₂₀ alkyl group); wherein each R³ is independently selected from the group consisting of a hydrogen, a methyl group, an ethyl group, a n-propyl group, an isopropyl group, a n-butyl group, a 2-butyl group and a 2-methyl-2-butyl group (preferably, a hydrogen, a methyl group and an ethyl group); and with the proviso that sum of the total number of carbon atoms in R¹ and R² is 5 to 21 (preferably, 6 to 20 carbon atoms; more preferably, 7 to 20 carbon atoms).

Preferably, the dishwashing detergent formulation of the present invention, comprises: 0.2 to 15 wt% (preferably, 1 to 10 wt%; most preferably, 2.5 to 7.5 wt%), based on dry weight of the dishwashing detergent formulation, of a carboxymethyl guar gum; wherein the carboxymethyl guar gum has a weight average molecular weight, M_{W}, of > 500,000 Daltons (preferably, 525,000 to 2,500,000 Daltons; more preferably, 600,000 to 2,250,000 Daltons; still more preferably, 750,000 to 2,100,000 Daltons; yet more preferably, 1,000,000 to 2,000,000 Daltons; still yet more preferably, 1,500,000 to 2,000,000 Daltons; most preferably, 1,600,000 to 1,850,000 Daltons) and a carboxymethyl degree of substitution, DS_{CM}, of 0.17 to 1 (preferably, 0.175 to 0.8; more preferably, 0.18 to 0.47; most preferably, 0.2 to 0.4).

Preferably, the carboxymethyl guar gum has a nitrogen content of < 0.1 wt% (preferably, < 0.05 wt%; more preferably, < 0.01 wt%; most preferably, < 0.001 wt%), based on weight of the carboxymethyl guar gum.

The dishwashing detergent formulation of the present invention, optionally further comprises: an additive. Preferably, the dishwashing detergent formulation of the present invention, further comprises: an additive selected from the group consisting of a dispersant polymer; a phosphonate (e.g., hydroxy ethylidene diphosphonic acid (HEDP); an alkalinity source; a bleaching agent (e.g., sodium percarbonate, sodium perborate); a bleach activator (e.g., tetraacetylethylenediamine (TAED)); a bleach catalyst (e.g., manganese(II) acetate, cobalt(II) chloride, bis(TACN)magnesium trioxide diacetate); an enzyme (e.g., protease, amylase, lipase, or cellulase); a foam suppressant; a coloring agent; a fragrance; a silicate; an additional builder; an antibacterial agent; a filler (e.g., sodium sulfate); a deposit control polymer and mixtures thereof. More preferably, the dishwashing detergent formulation of the present invention, further comprises an additive, wherein the additive is selected from the group consisting of a bleaching agent, a bleach activator, an enzyme, a filler and mixtures thereof. Still more preferably, the dishwashing detergent formulation of the present invention, further comprises an additive, wherein the additive includes a bleaching agent (e.g., sodium percarbonate, sodium perborate); a bleach activator (e.g., tetraacetylethylenediamine (TAED)); an enzyme (e.g., protease, amylase, lipase, or cellulase) and a filler (e.g., sodium sulfate). Most preferably, the dishwashing detergent formulation of the present invention, further comprises an additive, wherein the additive includes a bleaching agent, wherein the bleaching agent includes sodium percarbonate; a bleach activator, wherein the bleach activator includes tetraacetylethylenediamine (TAED); an enzyme, wherein the enzyme includes a protease and an amylase; and a filler, wherein the filler includes sodium sulfate.

Preferably, the dishwashing detergent formulation of the present invention optionally further comprises 0 to 15 wt% (preferably, 0 to 10 wt%; more preferably, 0 to 7.5 wt%; most preferably, 0 to 5 wt%), based on dry weight of the dishwashing detergent formulation, of a phosphonate. More preferably, the dishwashing detergent formulation of the present invention comprises 0 to 15 wt% (preferably, 0 to 10 wt%; more preferably, 0 to 7.5 wt%; most preferably, 0 to 5 wt%), based on dry weight of the dishwashing detergent formulation, of a phosphonate; wherein the phosphonate has a weight average molecular weight of ≤ 1,000 Daltons. Still more preferably, the dishwashing detergent formulation of the present invention comprises 0 to 15 wt% (preferably, 0 to 10 wt%; more preferably, 0 to 7.5 wt%; most preferably, 0 to 5 wt%), based on dry weight of the dishwashing detergent formulation, of a phosphonate; wherein the phosphonate comprises at least one of 1-hydroxyethylidene-1,1-diphosphonic acid (HEDP) and a salt of 1-hydroxyethylidene-1,1-diphosphonic acid. Most preferably, the dishwashing detergent formulation of the present invention comprises 0 to 15 wt% (preferably, 0 to 10 wt%; more preferably, 0 to 7.5 wt%; most preferably, 0 to 5 wt%), based on dry weight of the dishwashing detergent formulation, of a phosphonate; wherein the phosphonate is selected from the group consisting of 1-hydroxyethylidene-1,1-diphosphonic acid (HEDP) and salts thereof.

Fillers included in dishwashing detergent formulation tablets or powders are inert, water-soluble substances, typically sodium or potassium salts (e.g., sodium sulfate, potassium sulfate, sodium chloride, potassium cloride). In tablets and powders, fillers are typically present in amounts ranging from 0 wt% to 75 wt%. Fillers included in gel formulations typically include those mentioned for use in tablets and powders and also water.

Fragrances, dyes, foam suppressants, enzymes and antibacterial agents usually total no more than 10 wt%, alternatively no more than 5 wt%, of the dishwashing detergent formulation.

The dishwashing detergent formulation of the present invention, optionally further comprises: an alkalinity source. Suitable alkalinity sources include, without limitation, alkali metal carbonates and alkali metal hydroxides, such as sodium or potassium carbonate, bicarbonate, sesquicarbonate, sodium, lithium, or potassium hydroxide, or mixtures of the foregoing. Sodium hydroxide is preferred. The amount of alkalinity source in the dishwashing detergent formulation of the present invention (if any) is at least 1 wt% (preferably, at least 20 wt%) and up to 80 wt% (preferably, up to 60 wt%), based on dry weight of the dishwashing detergent formulation.

The dishwashing detergent formulation of the present invention, optionally further comprises: a bleaching agent (e.g., sodium percarbonate). The amount of the bleaching agent in the dishwashing detergent formulation of the present invention (if any) is preferably at a concentration of 1 to 25 wt% (more preferably, 5 to 20 wt%), based on dry weight of the dishwashing detergent formulation.

The dishwashing detergent formulation of the present invention, optionally further comprises: a bleach activator (e.g., tetraacetylethylenediamine (TAED)). The amount of the bleach activator in the dishwashing detergent formulation of the present invention (if any) is preferably at a concentration of 1 to 10 wt% (more preferably, 2.5 to 7.5 wt%), based on dry weight of the dishwashing detergent formulation.

Preferably, the dishwashing detergent formulation of the present invention comprises < 1 wt% (preferably, < 0.5 wt%; more preferably, < 0.2 wt%; still more preferably, < 0.1 wt%; yet still more preferably, < 0.01 wt%; most preferably, < the detectable limit), based on dry weight of the dishwashing detergent formulation, of phosphate. Preferably, the dishwashing detergent formulation of the present invention is phosphate free (i.e., contains 0 wt% phosphate).

Preferably, the dishwashing detergent formulation of the present invention comprises < 1 wt% (preferably, < 0.5 wt%; more preferably, < 0.2 wt%; still more preferably, < 0.1 wt%; yet still more preferably, < 0.01 wt%; most preferably, < the detectable limit), based on dry weight of the dishwashing detergent formulation, of builders selected from the group consisting of nitrilotriacetic acid; ethylenediaminetetraacetic acid; diethylenetriaminepentaacetic acid; glycine-N,N-diacetic acid; methyl glycine-N,N-diacetic acid; 2-hydroxyethyliminodiacetic acid; glutamic acid-N,N-diacetic acid; 3-hydroxy-2,2'-iminodissuccinate; S,S-ethylenediaminedisuccinate aspartic acid-diacetic acid; N,N'-ethylene diamine disuccinic acid; iminodisuccinic acid; aspartic acid; aspartic acid-N,N-diacetic acid; beta-alaninediacetic acid; polyaspartic acid; salts thereof and mixtures thereof. Most preferably, the dishwashing detergent formulation of the present invention contains 0 wt% of builders selected from the group consisting of nitrilotriacetic acid; ethylenediaminetetraacetic acid; diethylenetriaminepentaacetic acid; glycine-N,N-diacetic acid; methyl glycine-N,N-diacetic acid; 2-hydroxyethyliminodiacetic acid; glutamic acid-N,N-diacetic acid; 3-hydroxy-2,2'-iminodissuccinate; S,S-ethylenediaminedisuccinate aspartic acid-diacetic acid; N,N'-ethylene diamine disuccinic acid; iminodisuccinic acid; aspartic acid; aspartic acid-N,N-diacetic acid; beta-alaninediacetic acid; polyaspartic acid; salts thereof and mixtures thereof.

Preferably, the dishwashing detergent formulation of the present invention comprises < 1 wt% (preferably, < 0.5 wt%; more preferably, < 0.25 wt%; still more preferably, < 0.1 wt%; yet more preferably, < 0.05 wt%; still yet more preferably, < 0.01 wt%; most preferably, less than detectable limit), based on dry weight of the dishwashing detergent formulation, of phosphonate (e.g., hydroxy ethylidene diphosphonic acid (HEDP)). Preferably, the dishwashing detergent formulation of the present invention is phosphonate free (i.e., contains 0 wt% phosphonate).

Preferably, the dishwashing detergent formulation of the present invention comprises < 1 wt% (preferably, < 0.5 wt%; more preferably, < 0.25 wt%; still more preferably, < 0.1 wt%; yet more preferably, < 0.05 wt%; still yet more preferably, < 0.01 wt%; most preferably, less than detectable limit), based on dry weight of the dishwashing detergent formulation, of phosphorus. Preferably, the dishwashing detergent formulation of the present invention is phosphorus free (i.e., contains 0 wt% phosphorus).

Preferably, the dishwashing detergent formulation of the present invention comprises ≤ 0.4 wt% (preferably, < 0.3 wt%; more preferably, < 0.2 wt%; still more preferably, < 0.1 wt%; yet more preferably, < 0.01 wt%; still yet more preferably, < 0.001 wt%; most preferably, less than detectable limit), based on dry weight of the dishwashing detergent formulation, of urea. Preferably, the dishwashing detergent formulation of the present invention is urea free (i.e., contains 0 wt% urea).

Preferably, the dishwashing detergent formulation of the present invention has a pH (at 1 wt% in water) of at least 9 (preferably, ≥ 10; more preferably, ≥ 11.5). Preferably, the dishwashing detergent formulation of the present invention has a pH (at 1 wt% in water) of no greater than 13.

Preferably, the dishwashing detergent formulation of the present invention can be formulated in any typical form, e.g., as a tablet, powder, block, monodose, sachet, paste, liquid or gel. More preferably, the dishwashing detergent formulation of the present invention is formulated as a solid, e.g., as a tablet, granule, powder, block, paste. Most preferably, the dishwashing formulation of the present invention is formulated as a granule or powder.

Preferably, the dishwashing detergent formulation of the present invention contains less than 6 wt% (preferably, < 5 wt%; more preferably, < 2.5 wt%; still more preferably < 2 wt%; yet more preferably, < 1 wt%), based on weight of the dishwashing detergent formulation, of water).

The dishwashing detergent formulations of the present invention are useful for cleaning ware, such as eating and cooking utensils, dishes, in an automatic dishwashing machine.

Preferably, the dishwashing detergent formulation of the present invention are suitable for use under typical operating conditions. For example, when used in an automatic dishwashing machine, typical water temperatures during the washing process preferably are from 20 °C to 85 °C, preferably 30 °C to 70 °C. Typical concentrations for the dishwashing detergent formulation as a percentage of total liquid in the dishwasher preferably are from 0.1 to 1 wt%, preferably from 0.2 to 0.7 wt%. With selection of an appropriate product form and addition time, the dishwashing detergent formulations of the present invention may be present in the prewash, main wash, penultimate rinse, final rinse, or any combination of these cycles.

Preferably, the method of cleaning an article in an automatic dishwashing machine of the present invention, comprises: providing at least one soiled article (e.g., cookware, bakeware, tableware, dishware, flatware and/or glassware; preferably, glassware); providing a dishwashing detergent formulation of the present invention selected based on an ability to impede the formation of phosphonate scale on the at least one article; and applying the dishwashing detergent formulation to the at least one soiled article (preferably, in an automatic dishwasher) to provide a clean article.

Some embodiments of the present invention will now be described in detail in the following **Examples.**

**Degree of substitution:** Reported in the following examples was measured following the nonaqueous titration method in ASTM D1439-15, which was written specifically for carboxymethyl cellulose. Notwithstanding, the same principle applies for carboxymethyl guar. A precisely weighted amount of the polymer was first refluxed in an excessive amount of glacial acetic acid, and the formed sodium acetate was titrated with perchloric acid as a strong acid. Crystal violet served as the indicator, and at the endpoint the titrate changed from violet/blue to green.

**Weight average molecular weight, Mw:** Reported in the following examples was determined using gel permeation chromatography (GPC). Aqueous samples of the product polymers were prepared for GPC analysis at a concentration of about 2 mg/mL in an aqueous 20 mM phosphate buffer at pH 7. The separation was performed on a Waters UPLC system equipped with a refractive index detector, and the same phosphate buffer was used as the mobile phase. A column set composed of a TOSOH Bioscience TSKgel G2500PWxl 7.8 mm ID x 30 cm, 7-µm column and a TOSOH Bioscience TSKgel GMPWx1 7.8 mm ID x 30 cm, 13-µm column was used. The flow rate was maintained at 1.0 mL/min and the column temperature at 35 °C. Results were calibrated with narrow polyacrylic acid standards of a peak molecular weight (Mₚ) of 216 g/mol to 1,100,000 g/mol, fitted with a quadratic calibration curve. Standards 1-15 were obtained from American Polymer Standards and Standard 16 (AA trimer with Mₚ = 216 g/mol) was prepared internally. The flow rate was 1.0 mL/min and the column temperature was maintained at 35 °C. Empower Version 3 software (Waters Corporation) was used to calculate weighted-average molecular weight (M_{W}) of the example carboxymethylated galactomannan polymers.

### Synthesis S1: Carboxymethyl guar gum

A 500 mL, four necked flask fitted with a glass rod propeller connected to a Teflon blade and driven by an overhead mechanical sitter, a condenser and a thermocouple connected with a J-KEM temperature controller and providing input to a heating mantle. The flask was first charged with guar gum powder, **A1**, (30.05 g, corrected for volatile and ash content, Dabur DHV074), sodium chloroacetate, **B,** (15.12 g), anhydrous isopropyl alcohol, **C**, (192.82 g) and deionized water, **D1,** (48.15 g). Agitation of the flask contents was started to afford good mixing as indicated by a small vortex at the content surface in the flask and a nitrogen blanket was applied to remove entrained air. One hour later, a 50 wt% aqueous solution of sodium hydroxide, **E,** (12.57 g) was added dropwise via a syringe to the flask contents over about five minutes. Following addition of the sodium hydroxide solution, the flask contents were allowed to stir for ten minutes at ambient temperature. The temperature set point on the J-KEM temperature controller was then raised to 70 °C. Upon reaching 70 °C, the flask contents continued to be equilibrated for two and a half hours. Then the flask contents were cooled in an ice water bath to ambient temperature with continuous nitrogen flow, and glacial acetic acid, **F,** (4.29 g) was added dropwise to the flask contents to quench the reaction. Following a ten minute hold, the flask contents were transferred into a fritted Buchner funnel and washed (a) three times with a mixture of anhydrous isopropyl alcohol (240 g) and water (60 g), (b) twice with a mixture of anhydrous isopropyl alcohol (270 g) and water (30 g), and (c) twice with anhydrous isopropyl alcohol (300 g). The washed polymer was then dried in 50 °C vacuum oven overnight, ground with a mortar and pestle and passed through a metal screen (US 30, mesh size: 600 micrometers). The procedure afforded 45.25 g of an off white, beige dry product powder. The product polymer was then analyzed for volatile content; weight average molecular weight, M_{W}, as measured by aqueous Gel permeation chromatography; and carboxymethyl degree of substitution, DS_{CM}, as measured by perchloric acid titration. The results are provided in **TABLE 2.**

### Syntheses S2-S5: Carboxymethyl guar gum

In **Syntheses S2-S5,** carboxymethyl guar gum was prepared substantially as described in **Synthesis S1** but with varying flask volume and reagent feeds as noted in **TABLE 1.** The product polymers were then analyzed for volatile content; weight average molecular weight, M_{W}, as measured by aqueous Gel permeation chromatography; and carboxymethyl degree of substitution, DS_{CM}, as measured by perchloric acid titration. The results are provided in **TABLE 2.**

### Synthesis S8: Carboxymethyl dextran polymer

A 1000 mL, four necked flask fitted with a glass rod propeller connected to a Teflon blade and driven by an overhead mechanical sitter, a condenser and a thermocouple connected with a J-KEM temperature controller and providing input to a heating mantle. The flask was first charged with dextran dry powder, **A2,** (107.75 g, corrected for volatile and ash content, Ultradex 531 from Fermworx), sodium chloroacetate, **B,** (54.1 g), and deionized water, **D1,** (358.3 g). Agitation of the flask contents was started to afford good mixing as indicated by a small vortex at the content surface in the flask and a nitrogen blanket was applied to remove entrained air. One hour later, the reaction mixture formed a clear, colorless solution and a 50 wt% aqueous solution of sodium hydroxide, **E,** (45.2 g) was added dropwise via a syringe to the flask contents. Following addition of the sodium hydroxide solution, the flask contents were allowed to stir for five minutes at ambient temperature. The temperature set point on the J-KEM temperature controller was then raised to 70 °C. Upon reaching 70 °C, the flask contents continued to be equilibrated for three hours. Then the flask contents were cooled in an ice water bath to ambient temperature with continuous nitrogen flow, and glacial acetic acid, **F,** (12.1 g) was added dropwise to the flask contents to quench the reaction. Following a ten minute hold, the flask contents were diluted with deionized water, **D2,** (155.5 g) to form a clear, lightly-brown aqueous solution.

About 100 g of this carboxymethyl dextran polymer aqueous solution was further diluted with about 50 g of deionized water and then precipitated into 2 L of methanol. The precipitated polymer was soaked in methanol overnight, transferred to a fritted Buchner funnel, washed with additional methanol, and dried in a 50 °C vacuum oven overnight. The product polymer was then analyzed for weight average molecular weight, M_{W}, as measured by aqueous Gel permeation chromatography and carboxymethyl degree of substitution, DS_{CM}, as measured by perchloric acid titration. The results are provided in **TABLE 2.**

### Syntheses S9-S12: Carboxymethyl dextran polymer

In **Syntheses S9-S12,** carboxymethyl dextran was prepared substantially as described in **Synthesis S8** but with varying flask volume and reagent feeds as noted in **TABLE 1.** Note that in **Syntheses S11-S12** dextran **A3** (D1662 grade dextran sourced from Sigma Aldrich) was used in place of **A2.** The product was diluted with about 50 g of deionized water and then precipitated into 2 L of methanol. The precipitated polymer was soaked in methanol overnight, transferred to a fritted Buchner funnel, washed with additional methanol, and dried in a 50 °C vacuum oven overnight. The product polymer was then analyzed for weight average molecular weight, Mw, as measured by aqueous Gel permeation chromatography and carboxymethyl degree of substitution, DS_{CM}, as measured by perchloric acid titration. The results are provided in **TABLE 2.**

**TABLE 1**

| **Syn.** | **Flask (mL)** | **Reagent mass (g)** | | | | | | | | |
|---|---|---|---|---|---|---|---|---|---|---|
| | | **A1** | **A2** | **A3** | **B** | **C** | **D1** | **D2** | **E** | **F** |
| **S1** | 500 | 30.05 | -- | -- | 15.12 | 192.82 | 48.15 | -- | 12.57 | 4.29 |
| **S2** | 1,000 | 60.03 | -- | -- | 38.82 | 384.63 | 96.34 | -- | 31.10 | 8.07 |
| **S3** | 500 | 30.02 | -- | -- | 3.64 | 192.57 | 48.04 | -- | 4.74 | 4.28 |
| **S4** | 500 | 30.05 | -- | -- | 7.19 | 192.13 | 48.02 | -- | 7.12 | 4.18 |
| **S5** | 500 | 30.03 | -- | -- | 10.79 | 193.18 | 48.76 | -- | 9.60 | 4.18 |
| **S6** | 500 | 30.02 | -- | -- | 3.64 | 192.57 | 48.04 | -- | 4.74 | 4.28 |
| **S7** | 500 | 30.05 | -- | -- | 7.19 | 192.13 | 48.02 | -- | 7.12 | 4.18 |
| **S8** | 1,000 | -- | 107.75 | -- | 54.1 | -- | 358.3 | 155.5 | 45.2 | 12.1 |
| **S9** | 1,000 | -- | 107.73 | -- | 69.7 | -- | 238.9 | 322.1 | 56.4 | 12.1 |
| **S10** | 1,000 | -- | 107.76 | -- | 92.9 | -- | 149.1 | 483.1 | 71.8 | 12.1 |
| **S11** | 1,000 | -- | -- | 115.30 | 99.5 | -- | 169.0 | 514.5 | 76.9 | 12.1 |
| **S12** | 1,000 | -- | -- | 115.29 | 74.5 | -- | 264.3 | 342.2 | 59.8 | 12.1 |

**TABLE 2**

| **Prod. Synthesis** | **Volatile (wt%)** | **Mw (Daltons)** | **DS**_{CM} |
|---|---|---|---|
| **S1** | 3.83 | 1,652,000 | 0.60 |
| **S2** | 3.80 | 1,996,000 | 0.75 |
| **S3** | 2.84 | 1,631,000 | 0.20 |
| **S4** | 2.94 | 1,701,000 | 0.32 |
| **S5** | 5.27 | 1,577,000 | 0.46 |
| **S6** | 4.43 | not measured¹ | 0.19 |
| **S7** | 5.82 | 1,789,000 | 0.32 |
| **S8** | not measured | 350,000 | 0.38 |
| **S9** | not measured | 350,000 | 0.62 |
| **S10** | not measured | 350,000 | 0.72 |
| **S11** | not measured | 40,000 | 0.72 |
| **S12** | not measured | 40,000 | 0.51 |
| ¹ Molecular weight of this material was not measured but expected to be about 2,000,000 Daltons | | | |

### Comparative Examples C1-C8 and Examples 1-5: Dishwashing detergent formulations

Dishwashing compositions were prepared in each of **Comparative Examples C1-C8** and **Examples 1-5** having the component formulations identified in **TABLE 3.**

**TABLE 3**

| **Ingredient** | **Example (wt%)** | | | | | | | | | | | | |
|---|---|---|---|---|---|---|---|---|---|---|---|---|---|
| | **C1** | **C2** | **C3** | **C4** | **C5** | **C6** | **C7** | **C8** | **1** | **2** | **3** | **4** | **5** |
| Sodium carbonate | 25 | 25 | 25 | 25 | 25 | 25 | 25 | 25 | 25 | 25 | 25 | 25 | 25 |
| Sodium citrate | 20 | 20 | 20 | 20 | 20 | 20 | 20 | 20 | 20 | 20 | 20 | 20 | 20 |
| Sodium percarbonate | 15 | 15 | 15 | 15 | 15 | 15 | 15 | 15 | 15 | 15 | 15 | 15 | 15 |
| TAED (90%) | 4 | 4 | 4 | 4 | 4 | 4 | 4 | 4 | 4 | 4 | 4 | 4 | 4 |
| Branched alcohol alkoxylate¹ | 3.3 | 3.3 | 3.3 | 3.3 | 3.3 | 3.3 | 3.3 | 3.3 | 3.3 | 3.3 | 3.3 | 3.3 | 3.3 |
| Secondary alcohol ethoxylate² | 1.7 | 1.7 | 1.7 | 1.7 | 1.7 | 1.7 | 1.7 | 1.7 | 1.7 | 1.7 | 1.7 | 1.7 | 1.7 |
| Enzyme³ | 3 | 3 | 3 | 3 | 3 | 3 | 3 | 3 | 3 | 3 | 3 | 3 | 3 |
| Sodium disilicate | 2 | 2 | 2 | 2 | 2 | 2 | 2 | 2 | 2 | 2 | 2 | 2 | 2 |
| **Prod. S1*** | -- | -- | -- | -- | -- | -- | -- | -- | 5 | -- | -- | -- | -- |
| **Prod. S2*** | -- | -- | -- | -- | -- | -- | -- | -- | -- | 5 | -- | -- | -- |
| **Prod. S6*** | -- | -- | -- | -- | -- | -- | -- | -- | -- | -- | 5 | -- | -- |
| **Prod. S7*** | -- | -- | -- | -- | -- | -- | -- | -- | -- | -- | -- | 5 | -- |
| **Prod. S5*** | -- | -- | -- | -- | -- | -- | -- | -- | -- | -- | -- | -- | 5 |
| **Prod. S8*** | -- | -- | -- | 5 | -- | -- | -- | -- | -- | -- | -- | -- | -- |
| **Prod. S9*** | -- | -- | -- | -- | 5 | -- | -- | -- | -- | -- | -- | -- | -- |
| **Prod. S10*** | -- | -- | -- | -- | -- | 5 | -- | -- | -- | -- | -- | -- | -- |
| **Prod. S11*** | -- | -- | -- | -- | -- | -- | 5 | -- | -- | -- | -- | -- | - |
| **Prod. S12*** | -- | - | -- | -- | -- | -- | -- | 5 | -- | -- | -- | -- | -- |
| Dispersant-1⁴ | -- | 5 | -- | -- | -- | -- | -- | -- | -- | -- | -- | -- | -- |
| Dispersant-2⁵ | -- | -- | 5 | -- | -- | -- | -- | -- | -- | - | -- | -- | -- |
| Sodium sulfate | qs 100 | | | | | | | | | | | | |
| ¹ ECOSURF^{™} LFE-1410 nonionic surfactant from The Dow Chemical Company | | | | | | | | | | | | | |
| ² TERGITOL^{™} 15-S-9 nonionic surfactant from The Dow Chemical Company | | | | | | | | | | | | | |
| ³ INTENSA EVITY 145T 2:1 blend of protease and amylase from Novozymes | | | | | | | | | | | | | |
| ⁴ ACUSOL^{™} 445NG dispersant polymer from The Dow Chemical Company | | | | | | | | | | | | | |
| ⁵ ACUSOL^{™} 588G dispersant polymer from The Dow Chemical Company | | | | | | | | | | | | | |
| ^{*} Based on polymer solids. | | | | | | | | | | | | | |

### Procedure for preparing food soil

An 80% margarine/20% powdered milk food soil as described in ASTM D-3556 was prepared as follows:
a) Weighed 1,200 grams of Land-O-Lakes Margarine (after pre-melting in a 40 °C oven) into a suitable container;
b) added 300 grams of Nestle Carnation Nonfat Powdered milk to the container;
c) mixed well using an overhead mixer until the ingredients were homogeneous, with no visible lumps; and
d) poured 40 gram portions of the mixture into separate 59 mL (2 ounce) glass jars and refrigerated until used.

**TABLE 4**

| **Ingredient** | **wt%** |
|---|---|
| Land-O-Lakes Margarine | 80 |
| Nestle Carnation Nonfat Powdered Milk | 20 |

### Dishwashing Test Conditions

Automatic dishwashing tests were performed according to the procedure set forth in ASTM D-3556 under US conditions to evaluate cleaning performance. The tests were run in a Whirlpool Model WDF330PAHW automatic dishwashing machine. Wash cycle: 49 °C wash/60 °C rinse; dishwasher cycle time 65 minutes. Water: 300 ppm total hardness, Ca⁺²:Mg⁺² = 2:1 and 100 ppm Na-bicarbonate. Food soil: 40 g of the composition noted in **TABLE 4** was introduced to the wash liquor in a refrigerated 59 mL (2 ounce) glass jar. Detergent added during the main wash after completion of the pre-wash step. Each dishwashing composition from **Comparative Examples C1-C8** and **Examples 1-5** were tested, as noted in **TABLES 5-6,** dosed at 15 g per wash. Ballast load (porcelain plates, glass plates, plastic kitchenware and cutlery). The dishwasher door was left open for 30 minutes between dishwashing cycles as an additional drying step.

### Filming and Spotting Evaluation

After each of 5 wash cycles under the above dishwashing test conditions, Libbey Collins glass tumblers, plastic poly(styrene/acrylic) tumblers and stainless steel coupons were dried in open air. After drying, filming and spotting ratings were determined by trained evaluators by observations of glass tumblers, plastic tumblers in a light box with controlled illumination from below; and by observations of the stainless steel coupons with controlled illumination from above. Glass tumblers were rated for filming and spotting according to ASTM method ranging from 1 (no film/spots) to 5 (heavily filmed/spotted). An average value of 1 to 5 for filming and spotting was determined as reported in **TABLE 5.** Also reported in **TABLE 6** are the visual observations for the glass tumblers, plastic tumblers and stainless steel coupons.

**TABLE 5:**

| **Comp.** | **Glass Tumblers** | | |
|---|---|---|---|
| | **Film** | **Spot** | **Overall** |
| **C1** | 5 | 5 | 10 |
| **C2** | 1.5 | 1 | 2.5 |
| **C3** | 1.2 | 1.1 | 2.3 |
| **C4** | 5 | 5 | 10 |
| **C5** | 5 | 5 | 10 |
| **C6** | 5 | 5 | 10 |
| **C7** | 5 | 5 | 10 |
| **C8** | 5 | 5 | 10 |
| **1** | 1.7 | 3 | 4.7 |
| **2** | 1.8 | 2 | 3.8 |
| **3** | 2.1 | 1.7 | 3.8 |
| **4** | 1.6 | 1.4 | 3.0 |
| **5** | 2.2 | 2.8 | 5.0 |

**TABLE 6:**

| **Comp** | **Glass tumblers** | **Plastic tumblers** | **SS coupons** |
|---|---|---|---|
| **C1** | Bright scale (white) | Heavy scale (white), spots observed | Heavy scale (white), spots observed |
| **C2** | Light scale (blue) | Light scale (white), minimal spotting | Minimal scale (white), minimal spotting |
| **C3** | Light scale (white) | Light scale (white), no spotting | Minimal scale (white), minimal spotting |
| **C4** | Bright scale (white) | Bright scale (white) | Heavy scale (white), spots observed |
| **C5** | Bright scale (white) | Bright scale (white) | Heavy scale (white), spots observed |
| **C6** | Bright scale (white) | Bright scale (white) | Heavy scale (white), spots observed |
| **C7** | Bright scale (white) | Bright scale (white) | Heavy scale (white), spots observed |
| **C8** | Bright scale (white) | Bright scale (white) | Heavy scale (white), spots observed |
| **1** | Light scale (white) | Light scale (white), no spotting | Minimal scale (white), moderate spotting |
| **2** | Light scale (white) | Light scale (white), no spotting | Minimal scale (white), moderate spotting |
| **3** | Light scale (white) | Light scale (white), minimal spotting | Minimal scale (white), moderate spotting |
| **4** | Light scale (white) | Light scale (white), no spotting | Minimal scale (white), minimal spotting |
| **5** | Light scale (white) | Light scale (white), no spotting | Minimal scale (white), moderate spotting |

## Claims

1. A dishwashing detergent formulation comprising:
a builder;
a nonionic surfactant; and
a carboxymethyl guar gum, wherein the carboxymethyl guar gum has a weight average molecular weight, Mw, of > 500,000 Daltons and a carboxymethyl degree of substitution, DS_{CM}, of 0.17 to 1.

2. The dishwashing detergent formulation of claim 1, wherein the dishwashing detergent formulation comprises < 1 wt%, based on weight of the dishwashing detergent formulation, of HEDP.

3. The dishwashing detergent formulation of claim 1, wherein the dishwashing detergent formulation comprises ≤ 0.4 wt%, based on weight of the dishwashing detergent formulation, of urea.

4. The dishwashing detergent formulation of claim 1, wherein the dishwashing detergent formulation is solid.

5. The dishwashing detergent formulation of claim 1, wherein the dishwashing detergent formulation is anhydrous.

6. The dishwashing detergent formulation of claim 1, wherein the builder is selected from the group consisting of carbonate, bicarbonate, citrate, silicate and mixtures thereof.

7. The dishwashing detergent formulation of claim 1, wherein the dishwashing formulation comprises less than 0.1 wt%, based on dry weight of the dishwashing formulation, of phosphate, measured as elemental phosphorus.

8. The dishwashing detergent formulation of claim 1, wherein the dishwashing formulation contains 0 wt%, based on the dry weight of the dishwashing detergent formulation, of builders selected from the group consisting of nitrilotriacetic acid; ethylenediaminetetraacetic acid; diethylenetriaminepentaacetic acid; glycine-N,N-diacetic acid; methyl glycine-N,N-diacetic acid; 2-hydroxyethyliminodiacetic acid; glutamic acid-N,N-diacetic acid; 3-hydroxy-2,2'-iminodissuccinate; S,S-ethylenediaminedisuccinate aspartic acid-diacetic acid; N,N'-ethylene diamine disuccinic acid; iminodisuccinic acid; aspartic acid; aspartic acid-N,N-diacetic acid; beta-alaninediacetic acid; polyaspartic acid; salts thereof and mixtures thereof.

9. The dishwashing detergent formulation of claim 1, further comprising an additive selected from the group consisting of a bleaching agent, a bleach activator, an enzyme, a filler, and mixtures thereof.

10. A method of cleaning an article in an automatic dishwashing machine, comprising:
providing at least one article;
providing a dishwashing detergent formulation selected based on an ability to impede the formation of phosphonate scale on the at least one article, wherein the dishwashing detergent formulation is selected to be according to claim 1; and
applying the selected dishwashing detergent formulation to the at least one article.

## Patentansprüche

1. Geschirrspülmittelformulierung, umfassend:
einen Builder;
ein nichtionisches Tensid; und
ein Carboxymethylguargummi, wobei das Carboxymethylguargummi ein Gewichtsmittel des Molekulargewichts, Mw, von > 500.000 Dalton und einen Substitutionsgrad des Carboxymethyls, DS_{CM}, von 0,17 bis 1 aufweist.

2. Geschirrspülmittelformulierung nach Anspruch 1, wobei die Geschirrspülmittelformulierung < 1 Gew.-%, bezogen auf das Gewicht der Geschirrspülmittelformulierung, HEDP umfasst.

3. Geschirrspülmittelformulierung nach Anspruch 1, wobei die Geschirrspülmittelformulierung ≤ 0,4 Gew.-%, bezogen auf das Gewicht der Geschirrspülmittelformulierung, Harnstoff umfasst.

4. Geschirrspülmittelformulierung nach Anspruch 1, wobei die Geschirrspülmittelformulierung fest ist.

5. Geschirrspülmittelformulierung nach Anspruch 1, wobei die Geschirrspülmittelformulierung wasserfrei ist.

6. Geschirrspülmittelformulierung nach Anspruch 1, wobei der Builder aus der Gruppe ausgewählt ist, bestehend aus Carbonat, Bicarbonat, Citrat, Silicat und Mischungen davon.

7. Geschirrspülmittelformulierung nach Anspruch 1, wobei die Geschirrspülformulierung zu weniger als 0,1 Gew.-%, bezogen auf das Trockengewicht der Geschirrspülformulierung, Phosphat, gemessen als elementarer Phosphor, umfasst.

8. Geschirrspülmittelformulierung nach Anspruch 1, wobei die Geschirrspülformulierung zu 0 Gew.-%, bezogen auf das Trockengewicht der Geschirrspülmittelformulierung, Builder enthält, die aus der Gruppe ausgewählt sind, bestehend aus Nitrilotriessigsäure; Ethylendiamintetraessigsäure; Diethylentriaminpentaessigsäure; Glycin-N,N-diessigsäure; Methylglycin-N,N-diacetsäure; 2-Hydroxyethyliminodiessigsäure; Glutaminsäure-N,N-diacetsäure; 3-Hydroxy-2,2'-iminodisuccinat; S,S-Ethylendiamindisuccinatasparaginsäure-diessigsäure; N,N'-Ethylendiamindibernsteinsäure; Iminodibernsteinsäure; Asparaginsäure; Asparaginsäure-N,N-diessigsäure; beta-Alanindiessigsäure; Polyasparaginsäure; Salzen davon und Mischungen davon.

9. Geschirrspülmittelformulierung nach Anspruch 1, ferner umfassend einen Zusatzstoff, der aus der Gruppe ausgewählt ist, bestehend aus einem Bleichmittel, einem Bleichaktivator, einem Enzym, einem Füllstoff und Mischungen davon.

10. Verfahren zum Reinigen eines Gegenstands in einer automatischen Geschirrspülmaschine, umfassend:
Bereitstellen mindestens eines Gegenstands;
Bereitstellen einer Geschirrspülmittelformulierung, die basierend auf einer Fähigkeit ausgewählt ist, die Bildung von Phosphonatablagerungen auf dem mindestens einen Gegenstand zu hemmen, wobei die Geschirrspülmittelformulierung ausgewählt ist, um nach Anspruch 1 hergestellt zu sein; und
Anwenden der ausgewählten Geschirrspülmittelformulierung an dem mindestens einen Gegenstand.

## Revendications

1. Formulation détergente pour le lavage de la vaisselle, comprenant :
un adjuvant ;
un agent tensioactif non ionique ; et
une gomme de guar carboxyméthyle, dans laquelle la gomme de guar carboxyméthyle a une masse moléculaire moyenne en poids, M_{w},
de > 500 000 Daltons et un degré de substitution carboxyméthyle, DS_{CM,} de 0,17 à 1.

2. Formulation détergente pour le lavage de la vaisselle selon la revendication 1, dans laquelle la formulation détergente pour le lavage de la vaisselle comprend < 1 % en poids, sur la base du poids de la formulation détergente pour le lavage de la vaisselle, de HEDP.

3. Formulation détergente pour le lavage de la vaisselle selon la revendication 1, dans laquelle la formulation détergente pour le lavage de la vaisselle comprend ≤ 0,4 % en poids, sur la base du poids de la formulation détergente pour le lavage de la vaisselle, d'urée.

4. Formulation détergente pour le lavage de la vaisselle selon la revendication 1, dans laquelle la formulation détergente pour le lavage de la vaisselle est solide.

5. Formulation détergente pour le lavage de la vaisselle selon la revendication 1, dans laquelle la formulation détergente pour le lavage de la vaisselle est anhydre.

6. Formulation détergente pour le lavage de la vaisselle selon la revendication 1, dans laquelle l'adjuvant est choisi dans le groupe constitué de carbonate, bicarbonate, citrate, silicate et mélanges de ceux-ci.

7. Formulation détergente pour le lavage de la vaisselle selon la revendication 1, dans laquelle la formulation pour le lavage de la vaisselle comprend moins de 0,1 % en poids, sur la base du poids sec de la formulation pour le lavage de la vaisselle, de phosphate, mesuré en tant que phosphore élémentaire.

8. Formulation détergente pour le lavage de la vaisselle selon la revendication 1, dans laquelle la formulation pour le lavage de la vaisselle contient 0 % en poids, sur la base du poids sec de la formulation pour le lavage de la vaisselle, d'adjuvants choisis dans le groupe constitué d'acide nitrilotriacétique ; acide éthylènediaminetétraacétique ; acide diéthylènetriaminepentaacétique ; acide glycine-N,N-diacétique ; acide méthylglycine-N,N-diacétique ; acide 2-hydroxyéthyliminodiacétique ; acide glutamique-acide N,N-diacétique ; 3-hydroxy-2,2'-iminodissuccinate ; acide S,S-éthylènediaminedisuccinate aspartique-acide diacétique ; acide N,N'-éthylène-diamine disuccinique ; acide iminodisuccinique ; acide aspartique ; acide aspartique-acide N,N-diacétique ; acide bêta-alaninediacétique ; acide polyaspartique ; sels de ceux-ci et mélanges de ceux-ci.

9. Formulation détergente pour le lavage de la vaisselle selon la revendication 1, comprenant en outre un additif choisi dans le groupe constitué d'un agent de blanchiment, d'un activateur de blanchiment, d'une enzyme, d'une charge, et de mélanges de ceux-ci.

10. Procédé de nettoyage d'un article dans un lave-vaisselle automatique, comprenant :
la fourniture d'au moins un article ;
la fourniture d'une formulation détergente pour le lavage de la vaisselle choisie en fonction d'une capacité à empêcher la formation de tartre phosphonate sur l'au moins un article, dans lequel la formulation détergente pour le lavage de la vaisselle est choisie pour être selon la revendication 1 ; et
l'application de la formulation détergente choisie pour le lavage de la vaisselle à l'au moins un article.
